# EUROPEAN PATENT SPECIFICATION

(11) **EP 4 321 435 B1**
(45) Date of publication and mention of the grant of the patent: **22.10.2025**
(21) Application number: 23189703.4
(22) Date of filing: 04.08.2023
(51) Int. Cl.: B64D 11/06

(54) **DEPLOYABLE SLEEP SUPPORT SYSTEM FOR SEATED PASSENGERS**
ENTFALTBARES SCHLAFUNTERSTÜTZUNGSSYSTEM FÜR SITZENDE PASSAGIERE
SYSTÈME DE SUPPORT DE COUCHAGE DÉPLOYABLE POUR PASSAGERS ASSIS

(30) Priority: 08.08.2022 IN 202241045296; 25.04.2023 US 202318139026
(43) Date of publication of application: 14.02.2024
(73) Proprietor: B/E Aerospace, Inc., Winston-Salem, NC 27105 (US)
(72) Inventor: PRATHIPATI, Krishna Chaitanya, 5000050 Hyderbad (IN); KANDUKURI, Ravindra Ramulu, Secunderabad (IN)
(74) Representative: Dehns

(56) References cited:
- EP-B1- 3 035 825
- DE-A1- 10 213 644
- FR-B1- 2 836 099
- US-A- 3 544 161
- US-A1- 2013 232 696
- US-A1- 2022 185 481
- US-B2- 6 619 733
- US-B2- 8 528 978

## Description

### CROSS-REFERENCE TO RELATED APPLICATION

This nonprovisional application claims the benefit of priority of Indian provisional application number 202241045296 filed August 8, 2022 for "DEPLOYABLE SLEEP SUPPORT SYSTEM FOR SEATED PASSENGERS."

### TECHNICAL FIELD AND BACKGROUND

The present disclosure relates generally to integrated sleeping provisions for passenger seats, and more particularly to a sleep support system attached to or attachable to a backrest including a forward deployable support frame, a pillow assembly attachable to the forward deployed support frame, and a sanitary cover.

Some passenger seats include provisions for sleeping. For example, aircraft passenger seats may include mechanisms for achieving a reclined sitting position during flight while other seats may include mechanisms for adjusting a portion of the headrest forward. In either case, the sleeping provision requires the seated passenger to remain with their back against the backrest.

During long journeys such as long-haul flights, over time seated passengers may become uncomfortable and restless. Restless passengers may seek to change their sitting position. In the case of window seats, seated passengers may lean against the fuselage to sleep. In the case of economy class row seats, seated passengers may lean forward onto their deployed tray table to sleep. Neither sleeping solution is ideal considering the fuselage wall is subject to constant movement caused by turbulence, and the deployed tray table requires the seated passenger to lean forward well beyond a comfortable body angle. In addition, the seat pitch in economy class row seats does not allow the seated passenger to fold over completely, and the fuselage wall and the deployed tray table are hard rigid surfaces.

Therefore, what is needed is an integrated provision for sleeping which places the seated passenger in an ergonomic position, relieves pressure on the back, and which does not require the passenger to carry aboard their own dedicated sleeping device. US 8 528 978 B2 describes a transport vehicle seat-back with an integrated upright sleep support system.

### BRIEF SUMMARY

Broadly speaking, the present disclosure is directed to integrated sleeping provisions for passenger seats such as aircraft passenger seats.

To achieve the foregoing and other advantages, the inventive aspects disclosed herein are directed to an aircraft passenger seat including a backrest and a sleep support system attached to the backrest. The sleep support system includes a support frame generally including a first support arm pivotally attached to a first side of the backrest, the first support arm having a detached end configured to be lowered to deploy the first support arm in a forward direction, and a second support arm pivotally attached to a second side of the backrest, the second support arm having a detached end configured to be lowered to deploy the second support arm in a forward direction. A pillow assembly attaches to the first and second support arms when deployed forward and includes a pillow having a center opening, a first sleeve attached to a first side of the pillow and configured to receive the first support arm, and a second sleeve attached to a second side of the pillow and configured to receive the second support arm. A tubular cover may finish the system by being positioned over the pillow.

In some embodiments, each of the first support arm and the second support arm is constructed from telescoping members.

In some embodiments, the first support arm carries a first spring-loaded push button and the first side of the backrest carries a first spring-loaded pin and the second support arm carries a second spring-loaded push button and the second side of the backrest carries a second spring-loaded pin. In a stowed condition of the first support arm, the first spring-loaded pin is received in the first support arm axially aligned with the first spring-loaded push button, and in a stowed condition of the second support arm, the second spring-loaded pin is received in the second support arm axially aligned with the second spring-loaded push button. In use, the first spring-loaded push button is configured to be depressed to force the first spring-loaded pin to withdraw from the first support arm to deploy the first support arm forward, and the second spring-loaded push button is configured to be depressed to force the second spring-loaded pin to withdraw from the second support arm to deploy the second support arm forward.

In some embodiments, the first support arm defines a first ramped surface configured to drive the first spring-loaded pin in a direction of the backrest upon engagement of the first ramped surface with the first spring-loaded pin, and the second support arm defines a second ramped surface configured to drive the second spring-loaded pin in a direction of the backrest upon engagement of the second ramped surface with the second spring-loaded pin.

In some embodiments, the system further includes a first stop pin carried on the first side of the backrest configured to interact with the first support arm to prevent over travel of the first support arm in the forward direction, and a second stop pin carried on the second side of the backrest configured to interact with the second support arm to prevent over travel of the second support arm in the forward direction.

In some embodiments, the first side of the backrest is curved and the first support arm is curved toward the backrest, and wherein the second side of the backrest is curved and the second support arm is curved toward the backrest.

In some embodiments, the first sleeve is openable to be wrapped around the first support arm and includes fasteners for maintaining the first sleeve in a closed condition, the second sleeve is openable to be wrapped around the second support arm and includes fasteners for maintaining the second sleeve in a closed condition, and the pillow is elongate and the center opening is elongate.

In some embodiments, the first support arm is movable between a stowed condition alongside the first side of the backrest and a deployed condition forward of the backrest, and wherein an angle formed between the stowed condition and the deployed condition of the first support arm is no more than 45 degrees, and the second support arm is movable, independent of the first support arm, between a stowed condition alongside the second side of the backrest and a deployed condition forward of the backrest, and wherein an angle formed between the stowed condition and the deployed condition of the second support arm is no more than 45 degrees.

Inventive aspects of the present disclosure are further directed to a sleep support system attachable to a passenger seat backrest. The system includes a first support arm pivotally attachable to a first side of the backrest, the first support arm having a detached end configured to be lowered to deploy the first support arm in a forward direction relative to the backrest, a first retainer attachable to the first side of the backrest configured to retain the first support arm in a stowed condition, a second support arm pivotally attachable to a second side of the backrest, the second support arm having a detached end configured to be lowered to deploy the second support arm in a forward direction relative to the backrest, and a second retainer attachable to the second side of the backrest configured to retain the second support arm in a stowed condition.

A pillow assembly is attachable to the first and second support arms when the first and second support arms are deployed forward, the pillow assembly including a pillow having a center opening, a first sleeve attached to a first side of the pillow and configured to receive the first support arm, and a second sleeve attached to a second side of the pillow and configured to receive the second support arm. A tubular cover can be positioned to cover the pillow, for example, surrounding at least a portion of the pillow and covering the center opening.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated, and some features may be omitted or may be represented schematically in the interest of clarity. Like reference numbers in the drawings may represent and refer to the same or similar element, feature, or function. In the drawings:
FIG. 1 is a front isometric view of passenger seat backrests showing sleep system support arms stowed;
FIG. 2 is a front isometric view of the passenger seat backrests showing the support arms fully deployed and with a pillow assembly attached;
FIG. 3 is a detailed view showing the support arm pin locking feature;
FIG. 4 is a detailed view showing the support arm push button release feature;
FIG. 5 is a detailed view showing the ramped arm feature for stowing the arm;
FIG. 6 is a detailed view showing the support arm stop feature;
FIG. 7 is a sectional view showing the telescoping and pin release locking features;
FIG. 8 is a rear isometric view of a passenger seat showing the support arms fully deployed and the pillow assembly installed;
FIG. 9 is a side view of the passenger seat showing the angle of the fully deployed support arms;
FIGS. 10A and 10B are front isometric views of the pillow assembly; and
FIG. 11 is a perspective view showing sanitary cover installation.

### DETAILED DESCRIPTION

The description set forth below in connection with the appended drawings is intended to be a description of various, illustrative embodiments of the disclosed subject matter. Specific features and functionalities are described in connection with each illustrative embodiment; however, it will be apparent to those skilled in the art that the disclosed embodiments may be practiced without each of those specific features and functionalities. The aspects, features and functions described below in connection with one embodiment are intended to be applicable to the other embodiments described below except where expressly stated or where an aspect, feature or function is incompatible with an embodiment.

Broadly speaking, the present disclosure provides embodiments of passenger seats equipped with an integrated sleep support system and a sleep support system configured to be installed on a passenger seat. In some implementations the passenger seat is an aircraft passenger seat such as a premium seat or an economy class seat of a seat row. In use, the sleep support system is stowed during taxi, takeoff and landing (TTOL) and may be deployed during flight. In some embodiments, a sanitary cover is replaced between uses of the sleep support system.

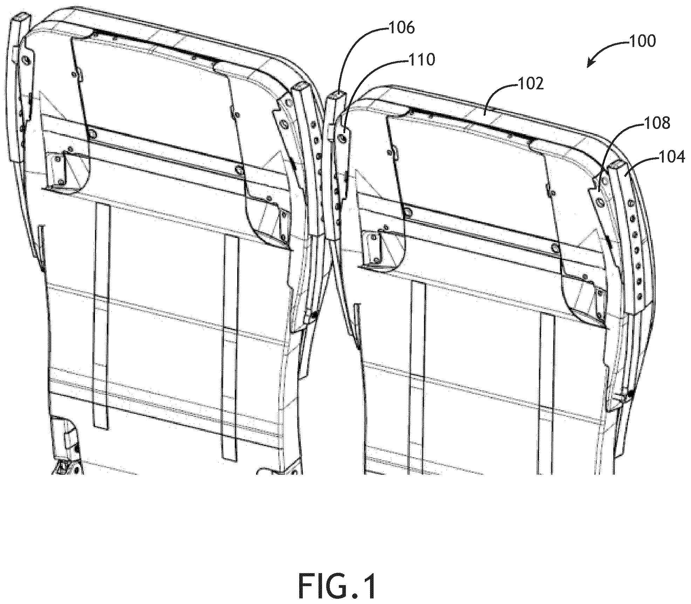

Referring to FIG. 1, a non-limiting example of a passenger seat is shown generally at reference numeral 100. The seat 100 includes a backrest 102, also referred to herein as a "seat back," and typically further includes a seat bottom (not shown) and in some implementations at least one armrest (not shown). Seats 100 may be stand-alone or part of a seat row including at least two laterally adjacent seats. The sleep support system according to the present disclosure may be installed on the backrest 102 as original equipment or may be installable on the backrest as retrofit equipment. In the case of an aircraft passenger seat, the sleep support system is stowed during TTOL and may be selectively deployed during flight according to the desire of the seated passenger.

The sleep support system includes a first support arm 104 and a second support arm 106. The first support arm 104 is pivotally attached to or pivotally attachable to a first side of the backrest 102. The second support arm 106 is pivotally attached to or pivotally attachable to a second side of the backrest 102. As such, each support arm 104, 106 stows along its respective side of the backrest 102 between uses of the sleep support system. In some embodiments, the backrest 102 may be curved and each support arm 104, 106 may also be curved, for example with substantially corresponding curvatures, to provide compact stowage and clean aesthetics. Each support arm 104, 106 may be constructed from telescoping parts to permit height adjustment, wherein the telescoping parts lock relative to each other by way of a spring-loaded pin configuration.

Each of the first and second support arms 104, 106 is retained in its stowed condition by way of a retainer located on the backrest 102. As shown, a first retainer 108 functions to retain the first support arm 104 in the stowed condition and a second retainer 110 functions to retain the second support arm 106 in the stowed condition. The first and second support arms 104, 106 are independently retained and independently deployable. Each of the first and second retainers 108, 110 are positioned on their respective side of the backrest 102 and may include a rigid closeout.

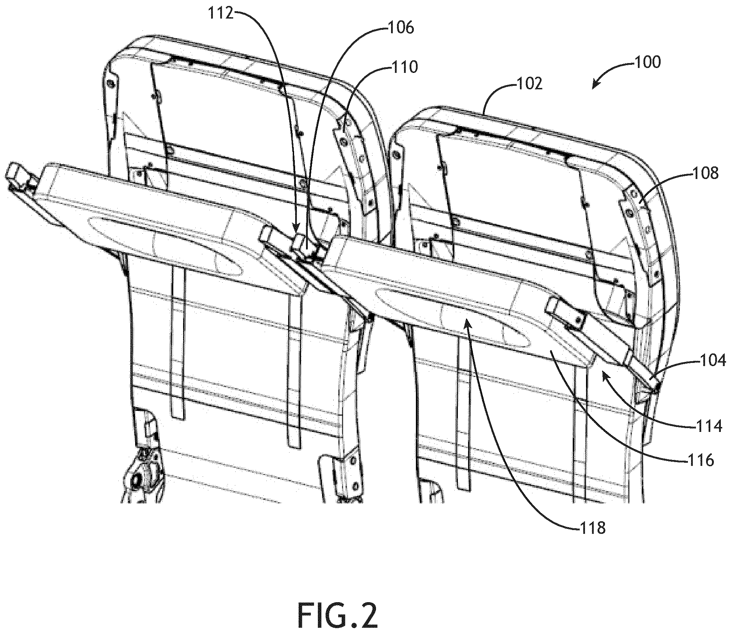

Referring to FIG. 2, the sleep support system deploys by releasing each of the first and second support arms 104, 106 and lowering the detached ends 112 of the support arms independently to deploy the support arms forward relative to the backrest 102. In their fully deployed position, each support arm 104, 106 is angled relative to the backrest 102 and to horizontal. The sleep support system further includes a pillow assembly 114 attachable to the deployed first and second support arms 104, 106. When installed, the pillow assembly 114 spans the distance between the deployed support arms generally centering a suspended pillow 116 between the support arms. The pillow 116 is positioned directly forward of the seated passenger, faces the seated passenger, and provides a bearing surface for the seated passenger to lean on. The pillow 116 may form a central opening 118. In use, the seated passenger may lean forward and place their head on the pillow 116 with their face positioned in the central opening 118. In use, the seated passenger may further grab and rest their arms on the first and second support arms 104, 106.

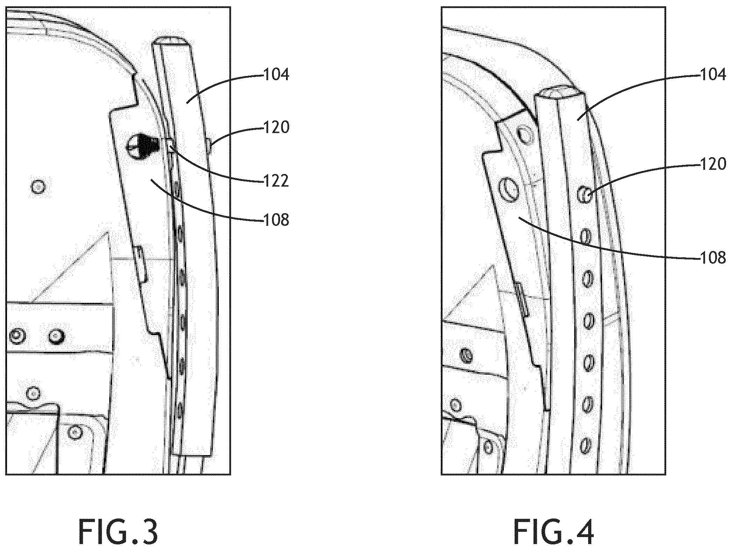

Referring to FIGS. 3 and 4, the sleep support system further includes a support arm release mechanism. In some embodiments, the first support arm 104 carries a first spring-loaded push button 120 and the first retainer 108 carries a first spring-loaded pin 122. Although not shown in FIG. 3, considering the symmetrical arrangement, the second support arm carries a second spring-loaded push button and the second side of the backrest carries a second spring-loaded pin. In the stowed condition of the first support arm 104, the first spring-loaded pin 122 is received in an opening formed in the first support arm such that the pin is axially aligned with the first spring-loaded push button 120. Likewise, in the stowed condition of the second support arm, the second spring-loaded pin is received in an opening formed in the second support arm such that the second pin is axially aligned with the second spring-loaded push button.

In use, to independently release the support arms, the first spring-loaded push button 120 is configured to be depressed to force the first spring-loaded pin 122 to withdraw from its respective opening formed in the first support arm 104 to deploy the first support arm forward. Likewise, the second spring-loaded push button is configured to be depressed to force the second spring-loaded pin to withdraw from its respective opening formed in the second support arm to deploy the second support arm forward.

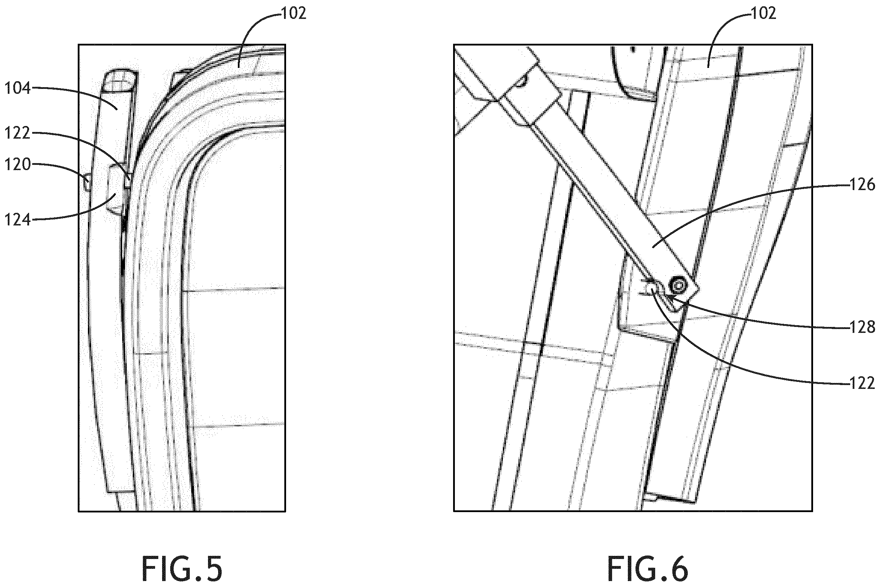

Referring to FIG. 5, the sleep support system further includes a return feature for assisting returning the deployed support arms to their stowed condition. As show, the first support arm 104 defines a ramped feature 124 formed on a back inboard side of the support arm vertically aligned with the first spring-loaded pin 122. **In** use, as the deployed first support arm 104 is moved toward its stowed condition the ramped surface 124 engages the first spring-loaded pin 122 thereby urging the first spring-loaded pin into the first retainer, i.e., toward the backrest 102. As the first arm 104 continues to move toward its stowed position, the ramped surface interacts with the first spring-loaded pin 122 to drive the pin further inward until the pin reaches the opening formed in the first support arm, at which time the spring action of the pin then drives the pin into the opening thereby retaining the first support arm in the stowed condition. Likewise, the same is true of the second support arm considering the symmetrical arrangement.

Referring to FIG. 6, the sleep support system further includes a stop feature for preventing over travel of the first and second support arms. As shown, a stop pin 126 carried on the backrest, for instance carried on the first retainer 108, extends laterally outward from the side of the backrest. In use, the pivoting first support arm 104 pivots forward until the first support arm, proximal to its attached end, interacts with the stop pin 126 to stop forward deployment. In some embodiments, the first support arm 104 defines a recess 128 configured to locate the stop pin 126. Likewise, the same is true of the second support arm considering the symmetrical arrangement.

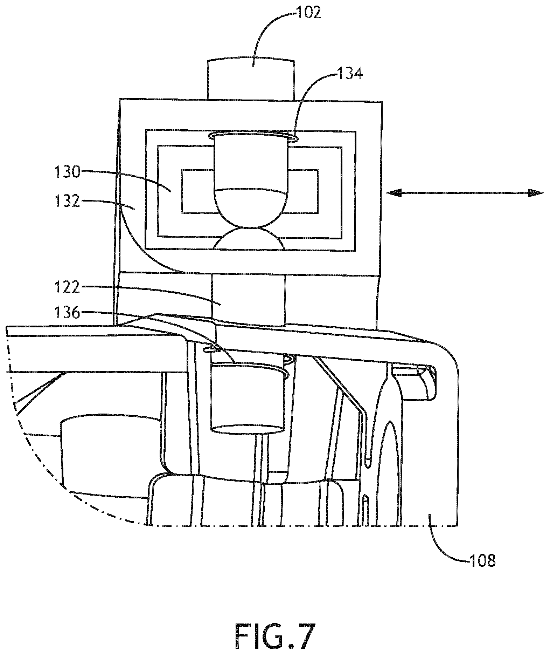

Referring to FIG. 7, each of the first of the first and second support arms may include telescoping parts for length adjustment. As shown, the telescoping parts may include a first part 130 slidably engaged in a second part 132. In some embodiment, the first part 132 is the lower part of the support arm pivotally attached to the backrest and the second part is the upper part of the support arm removably attachable to the first retainer 108. A first biasing member 134, for instance a helical coil spring, positioned around the push button 120 operates to bias the push button outward away from the backrest. A second biasing member 136, for instance a helical coil spring, positioned around the pin 122 operates to bias the pin inward toward to the backrest. The spring-loaded push button 120 and the spring-loaded pin 122 are axially aligned, or substantially axially aligned, such that depressing the push button drives the pin inward thereby withdrawing the pin from the opening formed in the arm. Releasing the spring-loaded push button 120 returns the push button to its outwardly biased position.

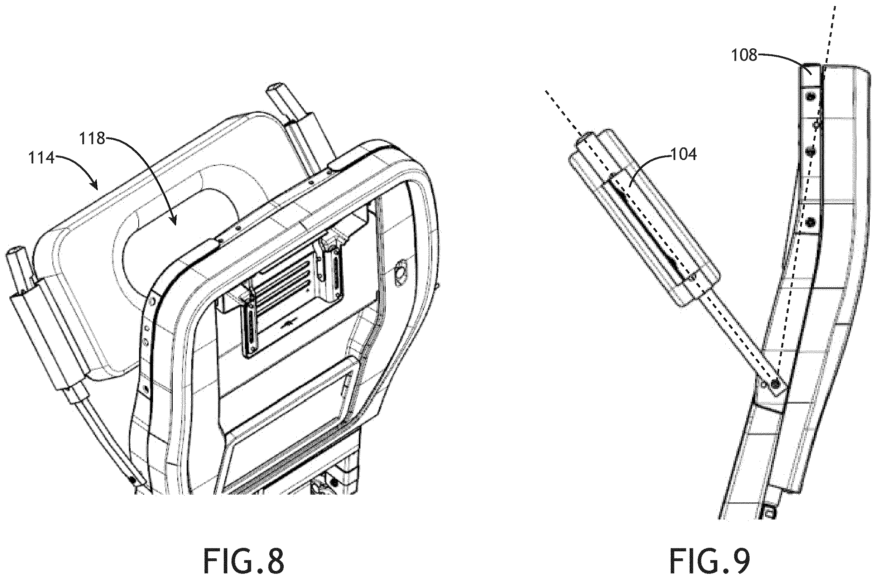

Referring to FIG. 8, when fully deployed with the pillow assembly 114 installed, the sleep support system is positioned directly forward of the seated passenger ready to be leaned on, for instance with the passenger's face positioned in the central opening 118. Referring to FIG. 9, the first support arm 104 is movable between a stowed condition alongside the first retainer 108 and a deployed condition forward of the first retainer, wherein an angle formed between the stowed condition and the deployed condition of the first support arm is no more than 45 degrees. Likewise, the same is true of the second support arm.

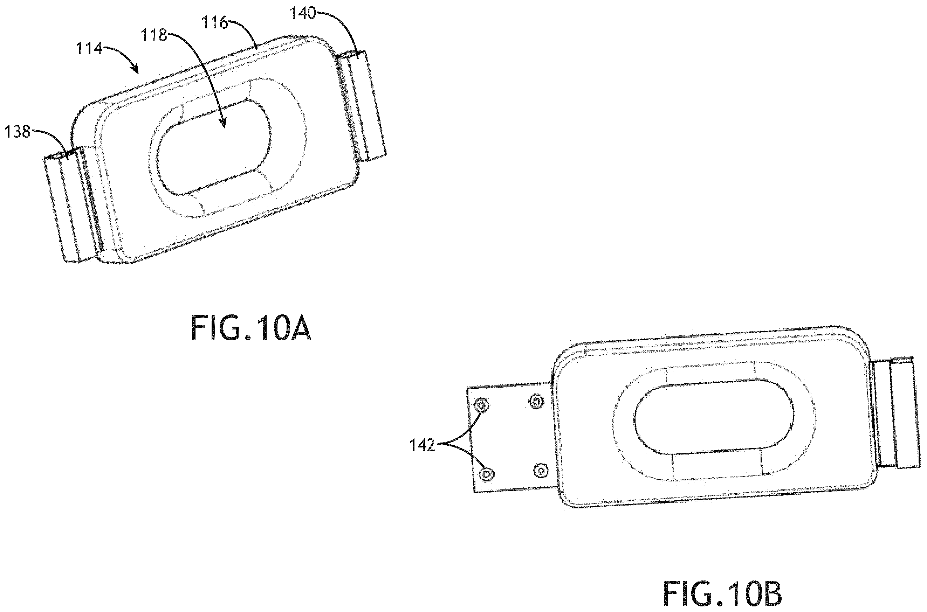

Referring to FIGS. 10A and 10B, the pillow assembly 114 generally includes the central pillow 116 defining the central opening 118, a first sleeve 138, and a second sleeve 140. The first sleeve 138 is attached to one side of the pillow 116 and is configured to receive the first support arm, and the second sleeve 140 is attached to the opposing side of the pillow and is configured to receive the second support arm. When installed, the pillow assembly 114 spans between the first and second support arms and holds the pillow in a suspended condition. In some embodiments, each of the first and second sleeves 138, 140 are configured to open in order to wrap around their respective support arm to facilitate installation. As show, each sleeve may be equipped with fasteners 142, for instance snap fasteners, for securing the sleeve in a closed condition around the support arm. In alternative embodiments, the sleeves may be closed and the pillow assembly installed from above.

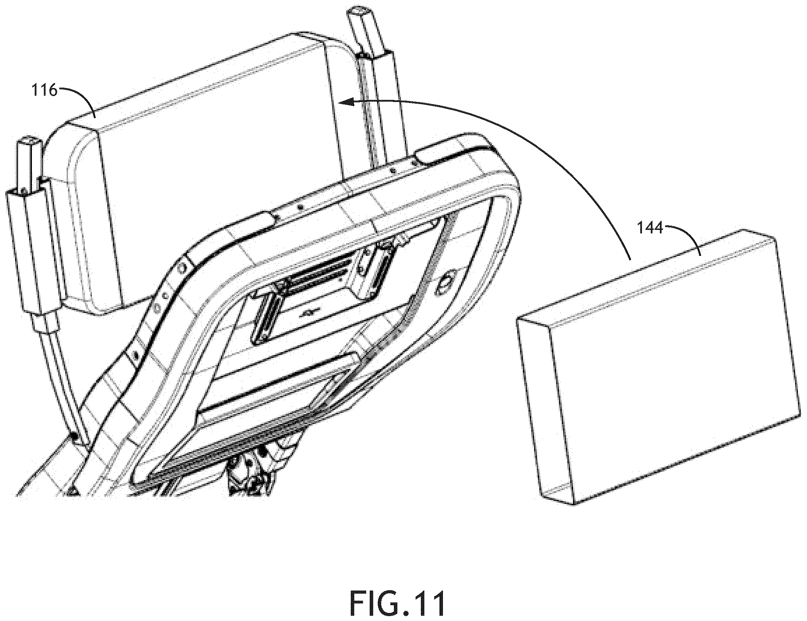

Referring to FIG. 11, the sleep support system may further include a sanitary cover 144 configured to be installed over at least a portion of the cushion 116. The sanitary cover 144 may be changed between uses of the sleep support system for instance between flights. In some embodiments, the sanitary cover 144 is tubular to slide over the cushion before installing the cushion assembly on the support arms. In some embodiments, the cover 144 cover a portion of the cushion and the central opening.

## Claims

1. An aircraft passenger seat, comprising:
a backrest (102); and
a sleep support system attached to the backrest (102), the sleep support system comprising:
a first support arm (104) pivotally attached to a first side of the backrest (102), the first support arm (104) having a detached end configured to be lowered to deploy the first support arm (104) in a forward direction;
a first retainer (108) attached to the first side of the backrest (102) configured to retain the first support arm (104) in a stowed condition;
a second support arm (106) pivotally attached to a second side of the backrest (102), the second support arm (106) having a detached end configured to be lowered to deploy the second support arm (106) in a forward direction;
a second retainer (110) attached to the second side of the backrest (102) configured to retain the second support arm (106) in a stowed condition; and
a pillow assembly (114) attachable to the first and second support arms when the first and second support arms are deployed forward, the pillow assembly (114) including a pillow having a center opening, a first sleeve attached to a first side of the pillow and configured to receive the first support arm (104), and a second sleeve attached to a second side of the pillow and configured to receive the second support arm (106).

2. The aircraft passenger seat according to claim 1, wherein the sleep support system further comprises a tubular cover (144) configured to cover at least a portion of the pillow.

3. The aircraft passenger seat according to claim 1 or 2, wherein:
the first support arm (104) carries a first spring-loaded push button (120) and the first retainer (108) carries a first spring-loaded pin;
the second support arm (106) carries a second spring-loaded push button and the second retainer (110) carries a second spring-loaded pin;
in the stowed condition of the first support arm (104), the first spring-loaded pin is received in the first support arm (104) axially aligned with the first spring-loaded push button (120);
in the stowed condition of the second support arm (106), the second spring-loaded pin is received in the second support arm (106) axially aligned with the second spring-loaded push button;
the first spring-loaded push button (120) is configured to be depressed to force the first spring-loaded pin to withdraw from the first support arm (104) to deploy the first support arm (104) forward; and
the second spring-loaded push button is configured to be depressed to force the second spring-loaded pin to withdraw from the second support arm (106) to deploy the second support arm (106) forward.

4. The aircraft passenger seat according to claim 4, wherein:
the first support arm (104) defines a first ramped surface configured to drive the first spring-loaded pin into the first retainer (108) upon engagement of the first ramped surface with the first spring-loaded pin; and
the second support arm (106) defines a second ramped surface configured to drive the second spring-loaded pin into the second retainer (110) upon engagement of the second ramped surface with the second spring-loaded pin.

5. The aircraft passenger seat according to any preceding claim, further comprising a first stop pin carried on the first side of the backrest (102) configured to interact with the first support arm (104) to prevent over travel of the first support arm (104) in the forward direction, and a second stop pin carried on the second side of the backrest (102) configured to interact with the second support arm (106) to prevent over travel of the second support arm (106) in the forward direction.

6. The aircraft passenger seat according to any preceding claim, wherein each of the first support arm (104) and the second support arm (106) is curved and constructed from telescoping parts

7. The aircraft passenger seat according to any preceding claim, wherein:
the first sleeve is configured to wrap around the first support arm (104) and includes fasteners for maintaining the first sleeve in a closed condition; and
the second sleeve is configured to wrap around the second support arm (106) and includes fasteners for maintaining the second sleeve in a closed condition.

8. The aircraft passenger seat according to any preceding claim, wherein:
the first support arm (104) is movable between a stowed condition alongside the first side of the backrest (102) and a deployed condition forward of the backrest (102), and wherein an angle formed between the stowed condition and the deployed condition of the first support arm (104) is no more than 45 degrees; and
the second support arm (106) is movable, independent of the first support arm (104), between a stowed condition alongside the second side of the backrest (102) and a deployed condition forward of the backrest (102), and wherein an angle formed between the stowed condition and the deployed condition of the second support arm (106) is no more than 45 degrees.

## Patentansprüche

1. Flugzeugpassagiersitz, umfassend:
eine Rückenlehne (102) und
ein an der Rückenlehne (102) angebrachtes Schlafunterstützungssystem, wobei das Schlafunterstützungssystem Folgendes umfasst:
einen ersten Stützarm (104), der schwenkbar an einer ersten Seite der Rückenlehne (102) angebracht ist, wobei der erste Stützarm (104) ein abgelöstes Ende aufweist, das ausgelegt ist, um abgesenkt zu werden, um den ersten Stützarm (104) in eine Vorwärtsrichtung zu entfalten;
eine erste Halterung (108), die an der ersten Seite der Rückenlehne (102) angebracht und ausgelegt ist, um den ersten Stützarm (104) in einem verstauten Zustand zu halten;
einen zweiten Stützarm (106), der schwenkbar an einer zweiten Seite der Rückenlehne (102) angebracht ist, wobei der zweite Stützarm (106) ein abgelöstes Ende aufweist, das ausgelegt ist, um abgesenkt zu werden, um den zweiten Stützarm (106) in eine Vorwärtsrichtung zu entfalten;
eine zweite Halterung (110), die an der zweiten Seite der Rückenlehne (102) angebracht und ausgelegt ist, um den zweiten Stützarm (106) in einem verstauten Zustand zu halten, und
eine Kissenanordnung (114), die an dem ersten und dem zweiten Stützarm anbringbar ist, wenn der erste und der zweite Stützarm nach vorn entfaltet sind, wobei die Kissenanordnung (114) ein Kissen, aufweisend eine mittige Öffnung, eine erste Hülse, die an einer ersten Seite des Kissens angebracht und ausgelegt ist, um den ersten Stützarm (104) aufzunehmen, und eine zweite Hülse, die an einer zweiten Seite des Kissens angebracht und ausgelegt ist, um den zweiten Stützarm (106) aufzunehmen, einschließt.

2. Flugzeugpassagiersitz nach Anspruch 1, wobei das Schlafunterstützungssystem ferner eine röhrenförmige Abdeckung (144) umfasst, die ausgelegt ist, um mindestens einen Abschnitt des Kissens zu bedecken.

3. Flugzeugpassagiersitz nach Anspruch 1 oder 2, wobei:
der erste Stützarm (104) einen ersten federbelasteten Drucktaster (120) trägt und der erste Halter (108) einen ersten federbelasteten Stift trägt;
der zweite Stützarm (106) einen zweiten federbelasteten Drucktaster trägt und der zweite Halter (110) einen zweiten federbelasteten Stift trägt;
der erste federbelastete Stift in dem verstauten Zustand des ersten Stützarms (104) in dem ersten Stützarm (104) axial ausgerichtet mit dem ersten federbelasteten Drucktaster (120) aufgenommen ist;
der zweite federbelastete Stift in dem verstauten Zustand des zweiten Stützarms (106) in dem zweiten Stützarm (106) axial ausgerichtet mit dem zweiten federbelasteten Drucktaster aufgenommen ist;
der erste federbelastete Drucktaster (120) ausgelegt ist, um nach unten gedrückt zu werden, um den ersten federbelasteten Stift derart zu forcieren, dass er aus dem ersten Stützarm (104) herausgezogen wird, um den ersten Stützarm (104) nach vorn zu entfalten, und
der zweite federbelastete Drucktaster ausgelegt ist, um nach unten gedrückt zu werden, um den zweiten federbelasteten Stift derart zu forcieren, dass er aus dem zweiten Stützarm (106) herausgezogen wird, um den zweiten Stützarm (106) nach vorn zu entfalten.

4. Flugzeugpassagiersitz nach Anspruch 4, wobei:
der erste Stützarm (104) eine erste Rampenfläche definiert, die ausgelegt ist, um den ersten federbelasteten Stift in die erste Halterung (108) zu steuern, wenn die erste Rampenfläche mit dem ersten federbelasteten Stift in Eingriff gelangt, und
der zweite Stützarm (106) eine zweite Rampenfläche definiert, die ausgelegt ist, um den zweiten federbelasteten Stift in die zweite Halterung (110) zu steuern, wenn die zweite Rampenfläche mit dem zweiten federbelasteten Stift in Eingriff gelangt.

5. Flugzeugpassagiersitz nach einem der vorhergehenden Ansprüche, ferner umfassend einen ersten Anschlagstift, der auf der ersten Seite der Rückenlehne (102) getragen wird und ausgelegt ist, um mit dem ersten Stützarm (104) zu interagieren, um einen Überhub des ersten Stützarms (104) in Vorwärtsrichtung zu verhindern, und einen zweiten Anschlagstift, der auf der zweiten Seite der Rückenlehne (102) getragen wird und ausgelegt ist, um mit dem zweiten Stützarm (106) zu interagieren, um einen Überhub des zweiten Stützarms (106) in Vorwärtsrichtung zu verhindern.

6. Flugzeugpassagiersitz nach einem der vorhergehenden Ansprüche, wobei sowohl der erste Stützarm (104) als auch der zweite Stützarm (106) jeweils gekrümmt sind und aus Teleskopteilen bestehen.

7. Flugzeugpassagiersitz nach einem der vorhergehenden Ansprüche, wobei:
die erste Hülse ausgelegt ist, um den ersten Stützarm (104) zu umschließen, und Befestigungselemente einschließt, um die erste Hülse in einem geschlossenen Zustand beizubehalten, und
die zweite Hülse ausgelegt ist, um den zweiten Stützarm (106) zu umschließen, und Befestigungselemente einschließt, um die zweite Hülse in einem geschlossenen Zustand beizubehalten.

8. Flugzeugpassagiersitz nach einem der vorhergehenden Ansprüche, wobei:
der erste Stützarm (104) zwischen einem verstauten Zustand entlang der ersten Seite der Rückenlehne (102) und einem entfalteten Zustand vor der Rückenlehne (102) bewegbar ist, und wobei ein zwischen dem verstauten Zustand und dem entfalteten Zustand des ersten Stützarms (104) gebildeter Winkel nicht mehr als 45 Grad ist, und
der zweite Stützarm (106) unabhängig von dem ersten Stützarm (104) zwischen einem verstauten Zustand entlang der ersten Seite der Rückenlehne (102) und einem entfalteten Zustand vor der Rückenlehne (102) bewegbar ist, und wobei ein zwischen dem verstauten Zustand und dem entfalteten Zustand des zweiten Stützarms (106) gebildeter Winkel nicht mehr als 45 Grad ist.

## Revendications

1. Siège passager d'aéronef, comprenant :
un dossier (102) ; et
un système de support de couchage fixé au dossier (102), le système de support de couchage comprenant :
un premier bras de support (104) fixé de manière pivotante à un premier côté du dossier (102), le premier bras de support (104) présentant une extrémité détachée conçue pour être abaissée afin de déployer le premier bras de support (104) dans une direction vers l'avant ;
un premier élément de retenue (108) fixé au premier côté du dossier (102) conçu pour retenir le premier bras de support (104) dans une position repliée ;
un second bras de support (106) fixé de manière pivotante à un second côté du dossier (102), le second bras de support (106) présentant une extrémité détachée conçue pour être abaissée afin de déployer le second bras de support (106) dans une direction vers l'avant ;
un second élément de retenue (110) fixé au second côté du dossier (102) conçu pour retenir le second bras de support (106) dans une position repliée ; et
un ensemble oreiller (114) pouvant être fixé aux premier et second bras de support lorsque les premier et second bras de support sont déployés vers l'avant, l'ensemble oreiller (114) comportant un oreiller présentant une ouverture centrale, un premier manchon fixé à un premier côté de l'oreiller et conçu pour recevoir le premier bras de support (104), et un second manchon fixé à un second côté de l'oreiller et conçu pour recevoir le second bras de support (106).

2. Siège passager d'aéronef selon la revendication 1, dans lequel le système de support de couchage comprend en outre une enveloppe tubulaire (144) conçue pour recouvrir au moins une partie de l'oreiller.

3. Siège passager d'aéronef selon la revendication 1 ou 2, dans lequel :
le premier bras de support (104) porte un premier bouton-poussoir à ressort (120) et le premier élément de retenue (108) porte une première broche à ressort ;
le second bras de support (106) porte un second bouton-poussoir à ressort et le second élément de retenue (110) porte une seconde broche à ressort ;
dans la position repliée du premier bras de support (104), la première broche à ressort est reçue dans le premier bras de support (104), alignée axialement avec le premier bouton-poussoir à ressort (120) ;
dans la position repliée du second bras de support (106), la seconde broche à ressort est reçue dans le second bras de support (106), alignée axialement avec le second bouton-poussoir à ressort ;
le premier bouton-poussoir à ressort (120) est conçu pour être enfoncé afin de forcer la première broche à ressort à se retirer du premier bras de support (104) de manière à déployer le premier bras de support (104) vers l'avant ; et
le second bouton-poussoir à ressort est conçu pour être enfoncé afin de forcer la seconde broche à ressort à se retirer du second bras de support (106) de manière à déployer le second bras de support (106) vers l'avant.

4. Siège passager d'aéronef selon la revendication 4, dans lequel :
le premier bras de support (104) définit une première surface inclinée conçue pour entraîner la première broche à ressort dans le premier élément de retenue (108) lors de la mise en prise de la première surface inclinée avec la première broche à ressort ; et
le second bras de support (106) définit une seconde surface inclinée conçue pour entraîner la seconde broche à ressort dans le second élément de retenue (110) lors de la mise en prise de la seconde surface inclinée avec la seconde broche à ressort.

5. Siège passager d'aéronef selon l'une quelconque revendication précédente, comprenant en outre une première broche d'arrêt portée sur le premier côté du dossier (102) conçue pour interagir avec le premier bras de support (104) afin d'empêcher un déplacement excessif du premier bras de support (104) dans la direction vers l'avant, et une seconde broche d'arrêt portée sur le second côté du dossier (102) conçue pour interagir avec le second bras de support (106) afin d'empêcher un déplacement excessif du second bras de support (106) dans la direction vers l'avant.

6. Siège passager d'aéronef selon l'une quelconque revendication précédente, dans lequel chacun du premier bras de support (104) et du second bras de support (106) est courbé et constitués de parties télescopiques.

7. Siège passager d'aéronef selon l'une quelconque revendication précédente, dans lequel :
le premier manchon est conçu pour s'enrouler autour du premier bras de support (104) et comporte des fixations destinées à maintenir le premier manchon dans une position fermée ; et
le second manchon est conçu pour s'enrouler autour du second bras de support (106) et comporte des fixations pour maintenir le second manchon dans une position fermée.

8. Siège passager d'aéronef selon l'une quelconque revendication précédente, dans lequel :
le premier bras de support (104) peut se déplacer entre une position repliée à côté du premier côté du dossier (102) et une position déployée à l'avant du dossier (102), et dans lequel un angle formé entre la position repliée et la position déployée du premier bras de support (104) n'est pas supérieur à 45 degrés ; et
le second bras de support (106) peut se déplacer, indépendamment du premier bras de support (104), entre une position repliée à côté du second côté du dossier (102) et une position déployée à l'avant du dossier (102), et dans lequel un angle formé entre la position repliée et la position déployée du second bras de support (106) n'est pas supérieur à 45 degrés.
